# EUROPÄISCHE PATENTSCHRIFT

(11) **EP 0 480 209 B1**
(45) Veröffentlichungstag und Bekanntmachung des Hinweises auf die Patenterteilung: **15.11.1995**
(21) Anmeldenummer: 91115693.3
(22) Anmeldetag: 16.09.1991
(51) Int. Cl.: A61C 13/00, B23Q 7/14

(54) **Rohling zur Herstellung eines zahntechnischen Formteils und Haltevorrichtung für denselben**
Blank for the manufacture of a dental workpiece and holding device therefor
Ebauche destinée à la fabrication d'une pièce dentaire et dispositif de préhension y associé

(30) Priorität: 10.10.1990 CH 3264/90
(43) Veröffentlichungstag der Anmeldung: 15.04.1992
(73) Patentinhaber: MIKRONA TECHNOLOGIE AG, CH-8957 Spreitenbach (CH)
(72) Erfinder: Eidenbenz, Stefan, CH-8185 Winkel (CH); Nowak, Claude, CH-5430 Wettingen (CH)
(74) Vertreter: Wagner, Wolfgang, Dr. Phil., Dipl.-Phys.

(56) Entgegenhaltungen:
- EP-A- 0 160 797
- EP-A- 0 219 107

## Beschreibung

Die Erfindung betrifft einen Rohling zur Herstellung eines zahntechnischen Formteils gemäss dem Oberbegriff des Anspruchs 1 sowie eine Haltevorrichtung für denselben gemäß dem Oberbegriff des Anspruchs 7. Ein Rohling gemäß dem Oberbegriff des Anspruchs 1 ist aus der EP-A-0 160 797 bekannt. Haltevorrichtungen gemäß dem Oberbegriff von Anspruch 7 sind allgemein bekannt.

Rohlinge der angesprochenen Art dienen zur Herstellung von Inlays, Onlays, Kronen etc. in der Zahnmedizin. Dabei wird das entsprechende Teil nach einem vom vorbereiteten Zahn abgenommenen Modell oder auch numerisch gesteuert nach einer mit optischen oder anderen Mitteln vorgenommenen Vermessung des Zahns durch Fräsen oder ähnliche Bearbeitungstechniken aus dem Rohling herausgearbeitet.

Wegen der geringen Fertigungstoleranzen ist dazu eine sehr genaue und feste Einspannung des Rohlings in einer Haltevorrichtung erforderlich. Bei einem allfälligen Wiedereinspannen nach vorgängigem Entfernen aus der Haltevorrichtung zur Ueberprüfung oder Nachbearbeitung muss die ursprüngliche Position exakt reproduzierbar sein.

Es ist ein gattungsgemässer Rohling bekannt (EP-A-0 160 797), bei welchem ein Rohlingskörper an einem Träger befestigt ist, welcher an der dem Rohlingskörper abgewandten Seite ein Verankerungsteil von im wesentlichen kreiszylindrischer Form trägt, wobei ein Längsschlitz am Verankerungsteil der azimutalen Positionierung dient. Ein derartiges Verankerungsteil ist jedoch in einer Haltevorrichtung nur schwer zugleich starr und völlig spielfrei einzuspannen, da etwa eine ebenfalls zylindrische Aufnahmeöffnung, die das problemlose Einführen des Verankerungsteils bis zu einem zur Definition der Lage in axialer Richtung erforderlichen Anschlag und ein ebenso problemloses Entfernen ermöglichen soll, zwangsläufig einen etwas grösseren Durchmesser als das Verankerungsteil aufweisen muss. Ein entsprechendes Problem ergibt sich bezüglich der azimutalen Fixierung. Eine elastische Ausbildung der den Rohling kontaktierenden Teile der Haltevorrichtung, die prinzipiell eine spielfreie Einspannung ermöglichen würde, kommt wegen der hohen Präzisionsanforderungen kaum in Betracht.

Aus der EP-A-0 219 107 ist ein Werkzeughalter bekannt, welcher einen konischen Verankerungsteil aufweist mit, auf einem Fortsatz desselben, einer konischen, schräg gegen das Werkstück weisende Angriffsfläche für den Eingriff einer Rückhaltevorrichtung. Eine Transportvorrichtung für die Werkstückhalter weist entsprechende konische Ausnehmungen auf mit Rückhaltevorrichtungen, die durch Spiralfedern nach innen gegen die jeweilige Angriffsfläche drückende Kugeln umfassen. Eine zuverlässige Fixierung bezüglich des azimutalen Freiheitsgrads ist damit jedoch nicht gewährleistet.

Aufgabe der Erfindung, wie sie in den Ansprüchen gekennzeichnet ist, ist es, einen Rohling zur Herstellung zahntechnischer Formteile zu schaffen, der in einer einfachen Haltevorrichtung völlig spielfrei eingespannt werden kann und ausserdem eine entsprechende Haltevorrichtung anzugeben.

Die durch die Erfindung erreichten Vorteile sind vor allem darin zu sehen, dass die Position des Rohlings mit geringem Aufwand vor allem auch in der Ausbildung der Haltevorrichtung äusserst präzis und reproduzierbar eingestellt werden kann. Ausserdem kann die Haltevorrichtung leicht so ausgestaltet werden, dass das Einstecken und Entfernen des Rohlings auf äusserst einfache Weise, ohne Schliessen und Oeffnen irgendwelcher Verriegelungsmechanismen möglich ist. Rohling und Haltevorrichtung eignen sich ganz besonders zur Herstellung von zahntechnischen Formteilen durch Kopierfräsen nach Modellen.

Im folgenden wird die Erfindung anhand von Figuren, die lediglich ein Ausführungsbeispiel darstellen, näher erläutert. Es zeigen:
- Fig. 1: in einem angeschnittenen Aufriss einen erfindungsgemässen Rohling in einer geschnitten dargestellten erfindungsgemässen Haltevorrichtung, und
- Fig 2a, 2b: in perspektivischer Darstellung zwei Ausführungen eines erfindungsgemässen Rohlings.

Die in den Figuren dargestellten Rohlinge 1 weisen jeweils einen Rohlingskörper 2, vorzugsweise aus keramischem Material auf und einen Träger 3, welcher vorzugsweise einstückig aus Metall, insbesondere Aluminium hergestellt ist. Der Träger 3 besteht aus einem Verankerungsteil und einer Basis 4, auf der der Rohlingskörper 2 befestigt ist, vorzugsweise durch Klebung.

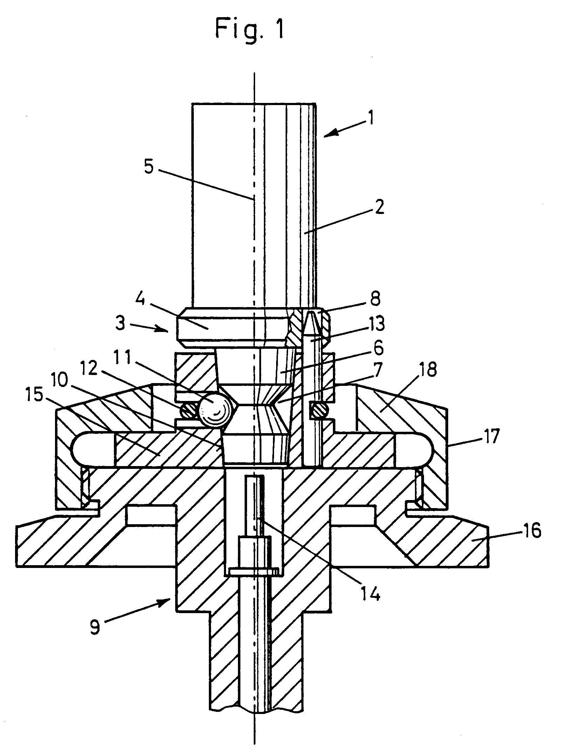

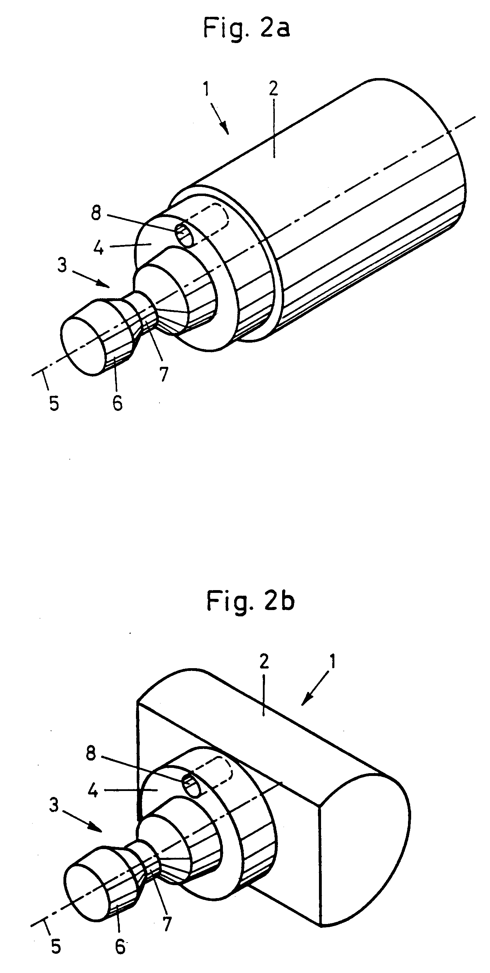

Erfindungsgemäss ist das Verankerungsteil als im wesentlichen um eine Trägerachse 5, die den Rohlingskörper 2 schneidet, rotationssymmetrischer, sich gegen die Basis 4 zu erweiternder konischer Stift 6 ausgebildet. Er trägt eine umlaufende Rastnut 7 für den Eingriff einer Rückhaltevorrichtung. Die Rastnut kann z. B. wie in Fig. 1 oder wie in Fig. 2a,b dargestellt ausgebildet sein.

Die Basis 4 ist als zum Stift koaxiales kreisrundes Plättchen ausgebildet. Sie trägt exzentrisch eine zur Trägerachse 5 parallele Bohrung 8 für den Eingriff eines gegen Verdrehung des Rohlings 1 wirksamen Sicherungsteils.

Der Rohlingskörper 2 ist im allgemeinen annähernd zylindrisch - es sind natürlich auch andere Formen wie Quader möglich - ausgebildet, wobei die Höhe grösser ist als der Durchmesser. Je nach Form und Lage des herauszufräsenden Formteils kann es von Vorteil sein, den Rohlingskörper 2 so am Träger 3 zu befestigen, dass seine Achse sich etwa mit der Trägerachse 5 deckt (Fig. 2a) oder ungefähr einen rechten Winkel mit ihr einschliesst (Fig. 2b).

Die Haltevorrichtung 9, in die der Rohling 1 zur Bearbeitung eingespannt wird, weist eine Aufnahmeöffnung 10 auf, welche um eine Oeffnungsachse, die sich mit der Trägerachse 5 deckt, rotationssymmetrisch ist und sich genau analog der Aussenfläche des Stiftes 6 nach innen konisch verengt. In einer seitlich in die Aufnahmeöffnung 10 mündenden Bohrung ist eine Kugel 11 gelagert, die als Rückhaltevorrichtung in die Rastnut 7 eingreift und durch den Druck, den sie auf die untere konische Randfläche ausübt, den Stift 6 in der Aufnahmeöffnung 10 festhält. Bei Einführung und Entfernung des Stifts 6 wird sie gegen die Federkraft eines Ringes 12 aus elastischem Material, der die Aufnahmeöffnung 10 umgibt und auf die derselben abgewandte Aussenseite der Kugel 11 einwirkt, zurückgeschoben. Zur Einführung des Stiftes 6 braucht derselbe nur in die Aufnahmeöffnung 10 gedrückt zu werden. Der untere Teil seiner konischen Mantelfläche drängt dann die Kugel 11 in die seitliche Bohrung zurück. Wenn der Stift 6 seinen Anschlag erreicht, d. h. mit besagter konischer Mantelfläche auf der konischen Begrenzungsfläche der Aufnahmeöffnung 10 satt aufsitzt, nimmt die Kugel 11 unter der Einwirkung des Rings 12 die in Fig. 1 dargestellte Position ein. Sie ragt in die Rastnut 7 und hält den Stift 6 fest, indem sie gegen die schräg nach oben weisende untere Randfläche der Rastnut 7 drückt. Zur Entfernung muss der Rohling 1 nur mit ausreichender Kraft nach oben gezogen werden, sodass besagte untere Randfläche der Rastnut 7 die Kugel 11 nach aussen drückt. Es müssen keinerlei Verriegelungsmechanismen geschlossen und geöffnet werden.

Zur Sicherung des Rohlings 1 gegen Verdrehen ist neben der Aufnahmeöffnung ein Sicherungsstift 13 angebracht, welcher sich nach oben verjüngt und in die Bohrung 8 in der Basis 4 des Trägers 3 eingreift. Der Sicherungsstift 13 ist so dimensioniert, dass der untere Teil seines in die Bohrung 8 ragenden Abschnitts mindestens quer zur Verbindungslinie zwischen Sicherungsstift 13 und Oeffnungsachse geringfügig grösseren Durchmesser hat als die Bohrung, sodass die Basis 4 im Bereich der Bohrung 8 beim Einspannen des Rohlings 1 leicht deformiert wird. Dadurch wird Spiel in azimutaler Richtung völlig vermieden und die Position des Rohlings 1 ist bei allfälligem Entfernen und Wiedereinspannen auch diesbezüglich exakt reproduzierbar. Der Sicherungsstift 13 muss natürlich aus härterem Material, vorzugsweise Stahl, bestehen als der Träger 3.

Am Grund der Aufnahmeöffnung 10 ist ein über eine Betätigungsstange von aussen in Richtung der Oeffnungsachse verschiebbarer Auswerfer 14 angebracht, der zur Entfernung des Rohlings 1 aus der Haltevorrichtung 9 dient.

Die Aufnahmeöffnung 10 und der Sicherungsstift 13 sind an einer Spannaufnahme 15 angebracht, welche auf einer zur Oeffnungsachse normalen ebenen Fläche eines Spannaufnahmeträgers 16 aufliegt und längs dieser Fläche nach Lösen einer Fixierung verschiebbar ist. Die Fixierung wird durch eine mit dem Spannaufnahmeträger 16 verschraubte Mutter 17 gebildet, welche mittels eines nach innen vorspringenden Halteflansches 18 einen die Spannaufnahme 15 umgebenden Flansch übergreift und sie gegen den Spannaufnahmeträger 16 presst.

## Patentansprüche

1. Rohling (1) zur Herstellung eines zahntechnischen Formteils, mit einem Rohlingskörper (2) aus Zahnrestaurationsmaterial und einem Träger (3), der eine sich im wesentlichen quer zur Trägerachse erstreckende, mit einer Ausnehmung versehene Basis (4) aufweist, auf der der Rohlingskörper (2) befestigt ist, wobei an die Basis (4) auf der dem Rohlingskörper (2) abgewandten Seite ein Verankerungsteil (6) zur Verankerung des Rohlings (1) an einer Haltevorrichtung (9) anschliesst, **dadurch gekennzeichnet**, **dass** das Verankerungsteil mindestens einen im wesentlichen um eine den Rohlingskörper (2) schneidende Trägerachse (5) rotationssymmetrischen, in Richtung auf denselben zu sich erweiternden konischen Abschnitt zur Kontaktierung mindestens eines Teils einer Aufnahmeöffnung (10) der Haltevorrichtung (9) aufweist, und daß die Ausnehmung in der Basis (4) ausschliesslich für einen parallel zur Trägerachse (5) erfolgenden Eingriff eines gegen Verdrehung des Rohlings (1) wirksamen Sicherungsteils ausgebildet ist.

2. Rohling nach Anspruch 1, **dadurch gekennzeichnet**, **dass** die Ausnehmung als zur Trägerachse (5) annähernd parallele Bohrung (8) ausgebildet ist.

3. Rohling (1) nach Anspruch 1 oder 2, **dadurch gekennzeichnet**, **dass** das Verankerungsteil mindestens eine wenigstens schräg gegen den Rohlingskörper (2) weisende Angriffsfläche für eine Rückhaltevorrichtung aufweist.

4. Rohling (1) nach Anspruch 3, **dadurch gekennzeichnet**, **dass** das Verankerungsteil als um die Trägerachse (5) rotationssymmetrischer im wesentlichen konischer Stift (6) ausgebildet ist und die Angriffsfläche als konische Randfläche einer Rastnut (7).

5. Rohling (1) nach einem der Ansprüche 1 bis 4, **dadurch gekennzeichnet**, **dass** die Haupterstreckungsrichtung des Rohlingskörpers (2) mit der Richtung der Trägerachse (5) übereinstimmt.

6. Rohling (1) nach einem der Ansprüche 1 bis 4, **dadurch gekennzeichnet**, **dass** die Haupterstreckungsrichtung des Rohlingskörpers (2) und die Trägerachse (5) einen rechten Winkel einschliessen.

7. Haltevorrichtung (9) zur Befestigung eines Rohlings (1) nach einem der Ansprüche 1 bis 6, **dadurch gekennzeichnet**, **dass** sie eine Aufnahmeöffnung (10) mit mindestens einem gegen das Innere derselben zu sich verengenden, im wesentlichen um eine Oeffnungsachse rotationssymmetrischen konischen Abschnitt aufweist sowie einen im wesentlichen parallel zur Oeffnungsachse über den Rand der Aufnahmeöffnung (10) hinausragenden Sicherungsstift (13).

8. Haltevorrichtung (9) nach Anspruch 7, **dadurch gekennzeichnet**, **dass** der Sicherungsstift (13) einen mindestens quer zur Richtung der Verbindungslinie zwischen demselben und der Oeffnungsachse sich verjüngenden Endabschnitt aufweist.

9. Haltevorrichtung (9) nach Anspruch 7 oder 8, **dadurch gekennzeichnet**, **dass** sie eine Rückhaltevorrichtung mit einem seitlich in die Aufnahmeöffnung (10) ragenden, gegen Federkraft zurückschiebbaren Rückhalteteil aufweist.

10. Haltevorrichtung (9) nach Anspruch 9, **dadurch gekennzeichnet**, **dass** das Rückhalteteil als Kugel (11) ausgebildet ist und zur Erzeugung der Federkraft ein die Aufnahmeöffnung (10) umgebender Ring (12) aus elastischem Material vorhanden ist, der auf die der Aufnahmeöffnung (10) abgewandte Seite der Kugel (11) einwirkt.

11. Haltevorrichung (9) nach einem der Ansprüche 7 bis 10, **dadurch gekennzeichnet**, **dass** zur Entfernung des Rohlings (1) am Grund der Aufnahmeöffnung (10) ein von aussen betätigbarer in Richtung der Oeffnungsachse verschiebbarer Auswerfer (14) vorgesehen ist.

12. Haltevorrichtung (9) nach einem der Ansprüche 7 bis 11, **dadurch gekennzeichnet**, **dass** sie zur Befestigung des Rohlings (1) eine Spannaufnahme (15) aufweist, welche nach Lösen einer Fixierung gegenüber einem Spannaufnahmeträger (16) in einer zur Oeffnungsachse senkrechten Ebene verschiebbar ist.

13. Haltevorrichtung (9) nach Anspruch 12, **dadurch gekennzeichnet**, **dass** sie zur Fixierung der Spannaufnahme (15) eine mit dem Spannaufnahmeträger (16) verschraubbare Mutter (17) aufweist, welche die Spannaufnahme (15) umgibt und sie mittels eines nach innen vorspringenden Halteflansches (18) gegen den Spannaufnahmeträger (16) presst.

## Claims

1. Blank (1) for the manufacture of a dental workpiece, with a blank body (2) made of dental restoration material and a support (3) which has a base (4) extending essentially transversely to the support axis and provided with a recess, on which base (4) the blank body (2) is secured, an anchoring part (6), for anchoring the blank (1) on a holding device (9), adjoining the base (4) on that side facing away from the blank body (2), characterized in that the anchoring part has at least one conical section which is essentially rotationally symmetrical about a support axis (5) intersecting the blank body (2) and widens in the direction towards the blank body (2), for providing contact with at least one part of a receiving opening (10) of the holding device (9), and in that the recess in the base (4) is designed exclusively for engagement, parallel to the support axis (5), of a securing part which acts against twisting of the blank (1).

2. Blank according to Claim 1, characterized in that the recess is designed as a bore (8) approximately parallel to the support axis (5).

3. Blank (1) according to claim 1 or 2, characterized in that the anchoring part has at least one contact surface, directed at least obliquely with respect to the blank body (2), for a retention device.

4. Blank (1) according to Claim 3, characterized in that the anchoring part is designed as an essentially conical pin (6) which is rotationally symmetrical about the support axis (5), and the contact surface is designed as a conical edge surface of a locking groove (7).

5. Blank (1) according to one of Claims 1 to 4, characterized in that the main direction of orientation of the blank body (2) corresponds with the direction of the support axis (5).

6. Blank (1) according to one of Claims 1 to 4, characterized in that the main direction of orientation of the blank body (2) and the support axis (5) enclose a right angle.

7. Holding device (9) for securing a blank (1) according to one of Claims 1 to 6, characterized in that it has a receiving opening (10) with at least one conical section narrowing towards the inside of the said receiving opening (10) and essentially rotationally symmetrical about an opening axis, as well as a securing pin (13) protruding beyond the edge of the receiving opening (10) essentially parallel to the opening axis.

8. Holding device (9) according to Claim 7, characterized in that the securing pin (13) has an end section which tapers at least transversely to the direction of the connection line between itself and the opening axis.

9. Holding device (9) according to Claim 7 or 8, characterized in that it has a retention device with a retention part which protrudes laterally into the receiving opening (10) and can be pushed back counter to a spring force.

10. Holding device (9) according to Claim 9, characterized in that the retention part is designed as a ball (11), and, for the purpose of generating the spring force, a ring (12) of elastic material is provided which surrounds the receiving opening (10) and which acts on that side of the ball (11) facing away from the receiving opening (10).

11. Holding device (9) according to one of Claims 7 to 10, characterized in that, in order to remove the blank (1), an ejector (14) which can be activated from the outside, and which can be displaced in the direction of the opening axis, is provided at the bottom of the receiving opening (10).

12. Holding device (9) according to one of Claims 7 to 11, characterized in that it has a clamp (15) for securing the blank (1), which clamp (15), after a fastening has been released, can be displaced relative to a clamp support (16) in a plane perpendicular to the opening axis.

13. Holding device (9) according to Claim 12, characterized in that, for the purpose of fastening the clamp (15), it has a nut (17) which can be screwed to the clamp support (16) and which surrounds the clamp (15) and presses it against the clamp support (16) by means of an inwardly projecting holding flange (18).

## Revendications

1. Ebauche (1) pour la production d'une pièce usinée dentaire, comportant un corps d'ébauche (2) en un matériau de réparation dentaire, et un support (3) qui présente une base (4) s'étendant sensiblement transversalement à l'axe de support et pourvue d'un évidement, sur laquelle est fixé le corps d'ébauche (2), et sur le côté détourné du corps d'ébauche (2) se raccorde à la base (4) un élément d'ancrage (6) pour l'ancrage de l'ébauche (1) sur un dispositif de préhension (9), caractérisée en ce que l'élément d'ancrage présente au moins un tronçon sensiblement à symétrie de révolution autour d'un axe de support (5) coupant le corps d'ébauche (2), ce tronçon étant conique et s'élargissant en direction du corps d'ébauche (2) pour l'établissement d'un contact avec au moins une partie d'une ouverture de réception (10) du dispositif de préhension (9), et en ce que l'évidement dans la base (4) est réalisé exclusivement pour un engagement, s'effectuant parallèlement à l'axe de support (5), d'un élément de blocage agissant à l'encontre d'une rotation de l'ébauche (1).

2. Ebauche selon la revendication 1, caractérisée en ce que l'évidement est réalisé sous la forme d'un perçage (8) approximativement parallèle à l'axe de support (5).

3. Ebauche (1) selon l'une ou l'autre des revendications 1 et 2, caractérisée en ce que l'élément d'ancrage présente au moins une surface d'attaque dirigée du moins en oblique par rapport au corps d'ébauche (8) pour un dispositif de retenue.

4. Ebauche (1) selon la revendication 3, caractérisée en ce que l'élément d'ancrage est réalisé sous la forme d'une tige (6) sensiblement conique à symétrie de révolution autour de l'axe de support (5), et en ce que la surface d'attaque est réalisée sous la forme d'une surface de bordure conique d'une gorge d'enclenchement (7).

5. Ebauche (1) selon l'une quelconque des revendications 1 à 4, caractérisée en ce que la direction d'extension principale du corps d'ébauche (2) coïncide avec la direction de l'axe de support (5).

6. Ebauche (1) selon l'une quelconque des revendications 1 à 4, caractérisée en ce que la direction d'extension principale du corps d'ébauche (2) et l'axe de support (5) enferment un angle droit.

7. Dispositif de préhension (9) pour la fixation d'une ébauche (1) selon l'une quelconque des revendications 1 à 6, caractérisé en ce qu'il présente une ouverture de réception (10) comportant au moins un tronçon conique sensiblement à symétrie de révolution autour d'un axe d'ouverture et en rétrécissement par rapport à l'intérieur de cette ouverture, ainsi qu'une tige de blocage (13) dépassant sensiblement parallèlement à l'axe de l'ouverture au-delà de la bordure de l'ouverture de réception (10).

8. Dispositif de préhension (9) selon la revendication 7, caractérisé en ce que la tige de blocage (13) présente un tronçon d'extrémité en rétrécissement au moins transversalement à la direction de la ligne de liaison entre celle-ci et l'axe d'ouverture.

9. Dispositif de préhension (9) selon l'une ou l'autre des revendications 7 et 8, caractérisé en ce qu'il présente un dispositif de retenue comportant un élément de retenue pénétrant latéralement dans l'ouverture de réception (10) et pouvant être repoussé à l'encontre d'une force élastique.

10. Dispositif de préhension (9) selon la revendication 9, caractérisé en ce que l'élément de retenue est réalisé sous la forme d'une bille (11), et en ce qu'il existe, pour l'établissement de la force élastique, un anneau (12) en un matériau élastique entourant l'ouverture de réception (10), qui agit sur le côté de la bille (11) détourné de l'ouverture de réception (10).

11. Dispositif de préhension (9) selon l'une quelconque des revendications 7 à 10, caractérisé en ce qu'il est prévu, pour l'enlèvement de l'ébauche (1) sur le fond de l'ouverture de réception (10) un éjecteur (14) susceptible d'être actionné depuis l'extérieur et déplaçable en direction de l'axe de l'ouverture.

12. Dispositif de préhension (9) selon l'une quelconque des revendications 7 à 11, caractérisé en ce qu'il présente, pour la fixation de l'ébauche (1), une réception à serrage (15) qui, après le relâchement d'une fixation, est déplaçable par rapport à un support de réception à serrage (16) dans un plan perpendiculaire par rapport à l'axe de l'ouverture.

13. Dispositif de préhension (9) selon la revendication 12, caractérisé en ce qu'il présente, pour la fixation de la réception à serrage (15), un écrou (17) susceptible d'être vissé sur le support de réception à serrage (16) et entourant la réception à serrage (15), et la pressant au moyen d'une bride de retenue (18) faisant saillie vers l'intérieur contre le support de réception à serrage (16).
